# EUROPEAN PATENT APPLICATION

(11) **EP 2 787 269 A1**
(43) Date of publication of application: **08.10.2014**
(21) Application number: 13461557.4
(22) Date of filing: 08.11.2013
(51) Int. Cl.: F16M 11/04

(54) **Sounding pipes rack for recovery ventilation systems**

(30) Priority: 10.12.2012 PL 40198612
(71) Applicant: Instytut Technologii Eksploatacji, 26-600 Radom (PL)
(72) Inventor: Zbrowski, Andrzej, 26-600 Radom (PL); Koziol, Stanislaw, 26-600 Radom (PL); Matecki, Krzysztof, 26-600 Radom (PL)
(74) Representative: Rumpel, Alicja

(57) **Abstract**

Sounding pipes rack of recovery ventilation systems in the form of a stand made of a pipe fixed by means of reinforcements on the base made of closed profiles, equipped with sets of driving wheels, according to the invention is characterized by the fact that on the leading pipe *(1*) the holder is placed slideably (*7*), connected by means of a mandrel (8) with the bracket of a sounding pipe (24), and the grip (7) contains a leading inlet (20) placed in the channel (*22*), made in the leading pipe (*1)* of the rack and an ear (*12)*, connected by a band of steel structure, equipped with a clip hook *(13) ,* led on the block (10), mounted in the frame (*9)*, fixed on the top of the leading pipe (*7)* connecting the grip (*7)*.

## Description

The object of the invention is sounding pipes rack of recovery ventilation systems, intended especially for positioning and fitting sounding pipes of air flow parameters in positions for testing recuperators and recovery units.

Known from the description US 7.658.359 B2 telescopic subassembly which contains the first longitudinal element and the second extended element, which is operated by the first extended unit, moved along the extension axis, containing force regulator and control assembly setting the initial load when the extended element is fully protruding and a regulating unit to adjust initial tension by using force exerted by the preloader.

Also known from the description US 6.644.601 B2 tray bracket to sustain the cable tray for supporting at least one wire. The bracket fixed to the lower base of the first unit has adjustable height. The first unit of the load-bearing element fixed to the upper end. It is adapted to support the trays so that a tray is operated in the second position towards the first location, in which the first unit is folded to the transport height.

Also known from the description US 5.448.464 fitting bracket of the photographic lamp. The stand consists of a base, vertical bracket, movable cart along the load-bearing element and the arm. The cart is mounted on a load-bearing bracket in such a way that it is moved manually along the load-bearing bracket in order to adjust vertical position of the lamp so that if the lamp reaches the required height, the cart is motionlessly held in that position by friction elements of the load-bearing bracket. As a result, it is easy to adjust height of the lamp. The purpose of the invention was to facilitate assembly and disassembly of the testing system consisting of sounding pipes with considerable weight on recuperators and recovery stations with different spacing of connector pipes.

Sounding pipes rack of recovery ventilation systems in the form of a rack made of a pipe fixed by means of reinforcements on the base made of closed profiles, equipped with sets of driving wheels, according to the invention is characterized by the fact that on the leading pipe holder is slideably placed connected by means of a mandrel with bracket of a measurement pipe, and the grid contains a leading inlet, placed in the channel made in the leading pipe of the rack and an ear connected by a band with the steel structure, equipped with a clip hook on the block, mounted in the frame, fixed on the top of the leading pipe, connecting handles with springs, situated inside the leading pipe, placed with a screw and a nut near the base of the rack and the grid contains screws with handles, intended to immobilize it in the designated position on the leading pipe, while the bracket of sounding pipes has the form of a stand with clamping rings with clamped screws on the insulation of sounding pipes, and the support is connected with the grip by means of a mandrel with leading clamping grooves, permitting angular settings of the pipe and blocking the grip thanks to the screws on the grip.

Advantages of the solution: fixing sounding pipes on stub pipes of recuperators with different spacings in the course of installation of recuperators measuring systems and recovery units and their disassembly, transfer of weight of sounding pipes by the spring system - a band with adjustable length - the grip during setting and assembly of the measuring system a sounding pipe recuperator, possibility of positioning the height of suspended of sounding pipes by means of the system spring - band grip, setting of angular positions of sounding pipes by grooves on mandrel and set screws and the foundation of a post on a systems of road wheels with brakes, lock of the made installation settings.

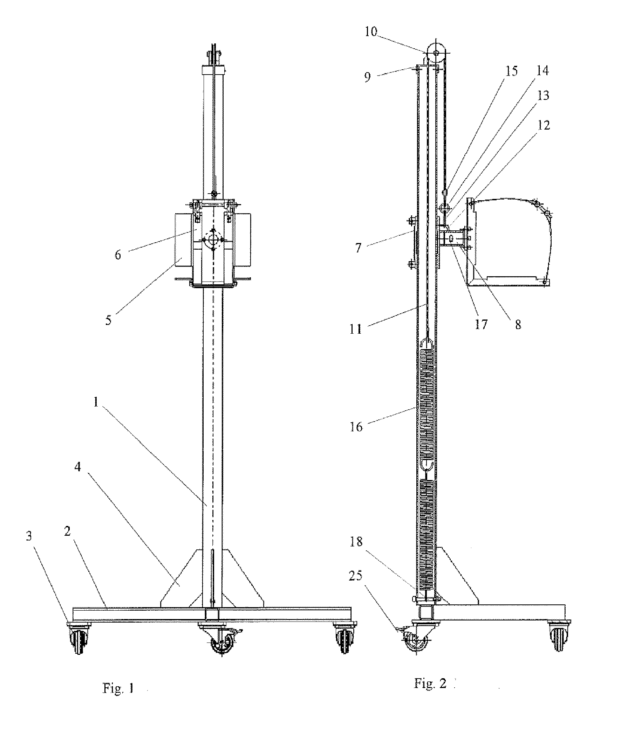

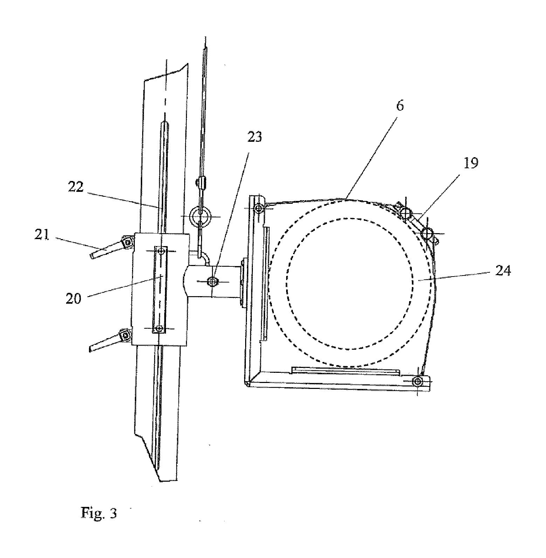

The object of the invention in the example of execution is shown in the figures; fig. 1, presents sounding pipes rack of recovery ventilation systems in the front view, fig. 2 presents the view of the rack in cross-section, fig. 3 presents the side view of the grip along with pipe bracket. The rack consists of a post made of a leading pipe 1, fixed by means of reinforcements 4 on the basis of closed profiles 2 equipped with sets of driving wheels 3. On the leading pipe 1 a grip is installed slideably 7, and in the grip on the mandrel 8 bracket of a sounding pipe. Grip 7 is equipped with an inlet 20 conducting it additionally in the channel 22 made in the pipe of a post and an ear 12 permitting suspension of the grip 7 on springs 16 and block 10 fastened in the frame 9 on the sounding pipe 1 by means of a band of steel cable 11 equipped with a clip hook 13, wheel of wire 14 and a clip 15 of the cable. Springs 16 mounted in the leading pipe 1 are fastened with screw 18 with a nut. Grip 7 is equipped with screws with a handle 21 used for fixing it in a set position on the sounding pipe 1. Bracket of a sounding pipe is a support 5 with clamping rings 6 clamped screws 19 on the insulation of a sounding pipe 24 connected with a grip of the pipe by means of a mandrel 8 with grooves leading - clamping grooves 17. Angular grip lock is possible thanks to the screws 23 on the grip.

Sounding pipe 24 inserted into clamping rings 6 of a base 5 is clamped with screws 19. After unblocking the clamp of the grip with handles 21 and clamping screws 23 suitable position of the fixed sounding pipe is set in respect of a relevant recuperator stub pipe ensuring their axial setting allowing inserting appropriate pipe ends to the stub pipe. Then, block the location of the sleeve 7 of the grip with handles 21, and screws 23 the angular location of base 5 of the bracket. The location of the rack is blocked by means of brakes 25 of sets of driving wheels.

## Claims

1. Sounding pipes rack of recovery ventilation systems in the form of a post made of a pipe fixed by means of reinforcements on the base made of closed profiles equipped with sets of driving wheels, characteristic because on the leading pipe /1/ is a grip mounted slideably /7/, connected by means of a mandrel /8/ with a bracket of a sounding pipe /24/, the grip /7/contains a conducting inlet /20/placed in the channel /22/made in the leading pipe /1/of the rack and the ear /12/ connected by a band /11/ of steel cable equipped with a clip hook /13/, on the block /10/mounted in the frame /9/, fixed on the top of the leading pipe /1/, connecting the grip /7/with springs /16/ situated inside the leading pipe /1/ placed with screws /18/with a nut near the base /2/ of the rack and the grip /7/contains screws with handles /21/intended for immobilization in the designated position on the leading pipe /1/while the bracket of a sounding pipe /24/has the form of a base /5/with clamping rings /6/with screws /19/, the base 5/is connected with a grip of the pipe /7/by means of a mandrel /8/with /17/leading clamping grooves.
